Europäisches Patentamt

European Patent Office

Office européen des brevets

(19)

(11) Numéro de publication: **0 206 903**
**B1**

(12) **FASCICULE DE BREVET EUROPEEN**

(45) Date de publication du fascicule du brevet:
**24.05.89**

(51) Int. Cl.⁴: **H01G 9/24**

(21) Numéro de dépôt: **86401262.0**

(22) Date de dépôt: **10.06.86**

(54) **Procédé de fabrication de condensateurs électrolytiques et condensateur obtenu par un tel procédé.**

(30) Priorité: **11.06.85 FR 8508809**

(43) Date de publication de la demande:
**30.12.86 Bulletin 86/52**

(45) Mention de la délivrance du brevet:
**24.05.89 Bulletin 89/21**

(84) Etats contractants désignés:
**DE GB IT NL**

(56) Documents cités:
**EP-A- 0 130 001**
**EP-A- 0 130 386**
**FR-A- 2 011 553**
**GB-A- 836 392**

**25TH ELECTRONIC COMPONENTS CONFERENCE,
Washington, DC, US, 12-14 mai 1975, pages 110-114;
H.F. PUPPOLO et al.: "Stacked-foil capacitor
packaging improvements and technology"**

(73) Titulaire: **COMPAGNIE EUROPEENNE DE
COMPOSANTS ELECTRONIQUES LCC, 50, rue Jean
-Pierre Timbaud B.P. 301, F-92402 Courbevoie(FR)**

(72) Inventeur: **Fonfria, Robert, THOMSON-CSF
SCPI 19, avenue de Messine, F-75008 Paris(FR)**
Inventeur: **Risbet, Marie-Paule, THOMSON-CSF
SCPI 19, avenue de Messine, F-75008 Paris(FR)**
Inventeur: **Zattara, Jean-Luc, THOMSON-CSF
SCPI 19, avenue de Messine, F-75008 Paris(FR)**

(74) Mandataire: **Ruellan-Lemonnier, Brigitte et al,
THOMSON-CSF SCPI, F-92045 PARIS LA DEFENSE
CEDEX 67(FR)**

## Description

La présente invention concerne la fabrication de condensateurs électrolytiques et plus particulièrement la fabrication de condensateurs électrolytiques se présentant sous la forme de composants reportables à plat sur un substrat entrant dans la conception d'un ensemble électronique. Ces composants sont généralement désignés sous l'appellation anglo-saxonne de chips.

On connaît différents types de condensateurs électrolytiques. La structure interne d'un tel composant est variable selon la nature du métal filmogène utilisé. Ainsi, il peut s'agir d'une mase poreuse bien définie géométriquement lorsque le métal utilisé est du tantale ou du niobium. Par contre, lorsque le métal ne se prête que difficilement à l'obtention d'une masse poreuse, l'élément capacitif est alors réalisé sous la forme d'une surface, gravée ou non, oxydée convenablement et bobinée sur elle-même. Des éléments complémentaires, cathode et support d'électrolyte, sont également incorporés à l'élément.

Les procédés de fabrication de ces bobines sont bien connus. Ils conduisent à des éléments capacitifs qui se prêtent difficilement à l'obtention d'un composant de type chips. Ceci est dû à des raisons relevant de la géométrie cylindrique des éléments capacitifs et de la nature plus ou moins liquide de l'électrolyte utilisé.

Afin de pallier ces inconvénients, l'invention propose un condensateur électrolytique se présentant sous la forme d'une structure en sandwich et permettant l'obtention d'un chips. Ce condensateur peut être obtenu par un procédé de réalisation bien adapté à la fabrication en grande série et à faible coût et qui comprend l'enroulement de feuilles anodique, support d'électrolyte et cathodique sur une roue de grand diamètre.

L'invention a donc pour objet un procédé de fabrication de condensateurs électrolytiques, caractérisé en ce que le procédé comporte au moins les étapes suivantes:

a) obtention d'au moins un ruban capacitif par bobinage sur une roue d'une feuille anodique, d'une feuille cathodique et d'un support d'électrolyte,

b) shoopage des faces latérales du ruban pour réaliser des armatures anodique et cathodique,

c) démontage du ruban capacitif de la roue,

d) délimitation de pavés capacitifs par des découpes pratiquées dans le ruban,

e) imprégnation dudit support par un électrolyte,

f) mise en place des pavés capacitifs sur des moyens de connexion destinés à former les électrodes des condensateurs,

g) enrobage des pavés dans une matière protectrice de façon à laisser dépasser des parties des moyens de connexion,

h) mise en forme desdites parties pour constituer les électrodes des condensateurs.

Le procédé permet d'obtenir avantageusement des condensateurs sous forme de chips en réalisant l'enrobage de chaque pavé capacitif sous la forme d'un parallélépipède et en repliant les électrodes sur deux faces oppposées du parallélépipède.

L'invention a également pour objet les condensateurs obtenus par ce procédé de fabrication.

L'invention sera mieux comprise et d'autres avantages apparaîtront au moyen de la description qui va suivre et des figures annexées parmi lesquelles :

- les figures 1 et 2 sont des vues d'un empilement constituant un ruban capacitif,
- la figure 3 est un schéma explicatif d'une méthode de fabrication d'un ruban capacitif par enroulement,
- la figure 4 est une vue de dessus d'un ruban capacitif tronçonné partiellement,
- la figure 5 illustre une opération de restauration du diélectrique d'anode,
- la figure 6 montre un pavé capacitif monté sur sa connectique,
- la figure 7 est une vue en coupe du composant final obtenu.

La fabrication de condensateurs empilés à partir de diélectrique plastique est connue. Cette fabrication consiste à enrouler sur une roue de grand diamètre des films de diélectrique plastique métallisé suivant un nombre de tours déterminés. Le ruban capacitif ainsi réalisé constitue un condensateur mère. On enroule ensuite durant un tour de roue un intercalaire plus large que les films plastiques. On peut réaliser une superposition d'un certain nombre de rubans capacitifs qui n'est limitée que par les risques d'effondrement de l'empilement. Des opérations de shoopage et de découpe sont ensuite exécutées jusqu'à l'obtention d'un parallélépipède qui après moulage constituera le chips. L'opération de shoopage consiste à obtenir, par projection de métal, une liaison mécanique et un contact électrique entre les feuillets métallisés constituant les électrodes des condensateurs.

L'invention propose d'adapter et d'améliorer ce procédé pour réaliser des condensateurs électrolytiques à feuilles métallisées empilées. D'une manière générale, le procédé commence par l'enroulement simultané, sur une roue de grand diamètre, d'une feuille anodique, d'un support d'électrolyte et d'une feuille cathodique. Chaque tour de la roue détermine la création d'un sandwich élémentaire. L'enroulement consécutif de n sandwichs élémentaires permet l'obtention d'un ruban capacitif d'une valeur correspondant au montage en parallèle de ces n couches. Ce bobinage est alors interrompu pour placer un intercalaire destiné à séparer le premier ruban capacitif du suivant. Cette opération sera répétée de façon à réaliser un empilement de rubans dont le nombre sera limité par la hauteur au-delà de laquelle il y a risque d'effondrement de l'ensemble. Cet ensemble sera recouvert, sur ses faces latérales d'un matériau conducteur compatible avec les exigences électrochimiques du condensateur. Il y a mise en parallèle des armatures de même signe au sein du ruban capacitif. Ces rubans sont ensuite coupés pour rompre la circonférence, séparés les uns des aures et on obtient des rubans capacitifs d'une longueur de 1 à 3 mètres. La phase suivante consiste à tronçonner les rubans perpendiculairement par rapport à leur axe longitudinal pour obtenir des pavés dont la capacité électrique dépendra des caractéristiques de base de la feuille anodique, du nombre de sandwichs élémentaires mis en parallèle ainsi que de la longueur séparant les coupes.

La coupe des rubans en pavés provoque pratiquement des dégradations des parties anodiques mises à nu. Ces dégradations consistent en une disparition partielle de la couche de diélectrique qui recouvre la feuille anodique. Il est alors nécessaire de procéder à une oxydation anodique pour reconstituer la couche de diélectrique. Cette opération de reconstitution est réalisée à partir d'un bain d'électrolyte. On utilisera de préférence un électrolyte qui, une fois l'opération de reconstitution achevée, puisse s'éliminer facilement par séchage. L'opération suivante consistera en l'imprégnation des supports d'électrolyte contenus dans le pavé par un électrolyte destiné à rester dans le condensateur.

Les pavés ainsi préparés recevront des éléments conducteurs de liaison. Il est avantageux de placer ces pavés dans des éléments de connexion dont le rôle est double : apporter des languettes métalliques soudables pour rendre les chips fonctionnels et assurer le rôle intermédiaire de plan de joint lors des opérations de moulage par injection ou transfert lorsque l'on veut mouler le pavé nu.

Les différentes opérations mentionnées vont être détaillées ci-dessous dans le cadre de la réalisation, donnée à titre non limitatif, de condensateurs électrolytiques à l'aluminium. Cette réalisation est susceptible de plusieurs variantes dont certaines seront décrites plus longuement.

La feuille anodique peut être constituée d'une feuille d'aluminium gravée et oxydée. La tension d'oxydation anodique peut être de l'ordre de 35V. Par exemple, la largeur de la feuille anodique sera de 4,5 mm et son épaisseur de 90 $\mu$m. La feuille cathodique peut être facilement gravée, avoir la même largeur et une épaisseur de 30 $\mu$m. De telles feuilles sont facilement disponibles dans le commerce. Le support d'électrolyte sera choisi parmi un certain nombre de matériaux. Son choix est déterminé par la nature de l'électrolyte retenu, par la valeur des résistances série et par la tenue en tension souhaitée. A ces considérations relatives à la structure interne du condensateur, il convient d'ajouter celles d'ordre mécanique rencontrés durant les opérations de bobinage. Parmi les matériaux susceptibles d'être retenus, on peut mentionner le papier, les matériaux plastiques poreux ou microporeux à base de polypropylène, polybutylène, polyéthylène ainsi que leurs dérivés. On peut également utiliser des structures fines maillées de polytétrafluoroéthylène ou de fibres de verre, etc.

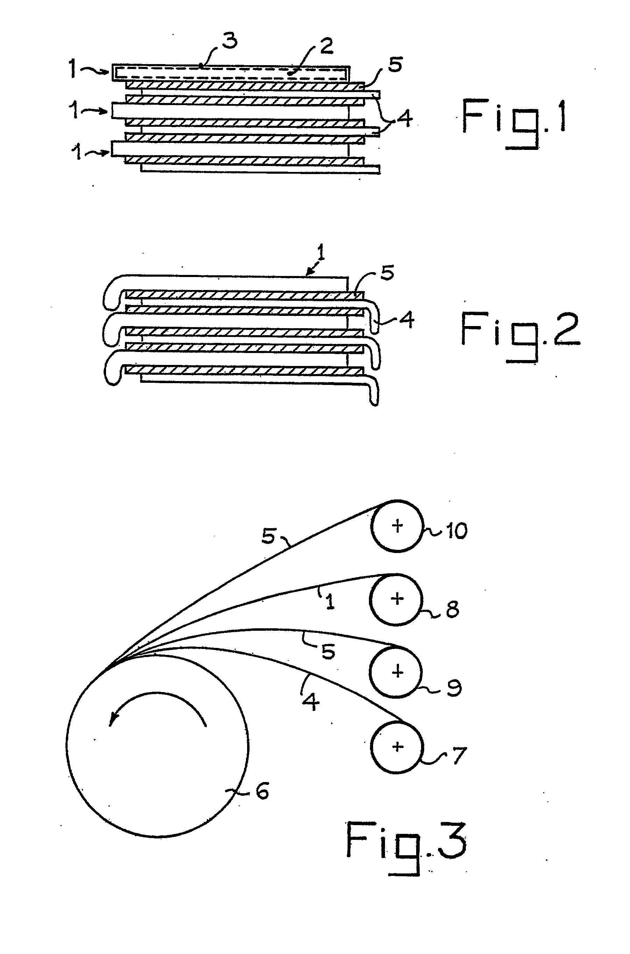

Ces trois feuilles sont par exemple bobinées simultanément sur une roue de grand diamètre (de 80 à 100 cm). Le bobinage est effectué de façon que les feuilles anodique et cathodique se superposent avec un léger décalage latéral et qu'elles soient séparées l'une de l'autre par le support d'électrolyte. La figure 1 est une vue en coupe montrant la façon d'empiler les différentes feuilles et le support d'électrolyte. La feuille anodique 1 est représentée avec sa partie purement métallique 2 en aluminium et la couche diélectrique 3 constituée d'oxyde $Al_2O_3$. La feuille cathodique 4 est décalée par rapport à la feuille anodique d'environ 0,1 à 0,3 mm. Le support d'électrolyte 5 est avantageusement disposé de façon à déborder légèrement d'un côté de la feuille anodique et du côté opposé de la feuille cathodique. Ceci permet une meilleure isolation électrique entre anode et cathode.

Il peut être avantageux de rabattre les bords extérieurs des feuilles anodique et cathodique d'un angle proche de 90° comme représenté à la figure 2. Sur cette figure, on voit que les feuilles anodiques sont rabattues du côté où elles débordent de l'empilement de même pour les feuilles cathodiques. Ces débordements peuvent être réalisés grâce à des molettes placées perpendiculairement aux feuilles anodique et cathodique. Ce bordage présente un intérêt certain lors de l'opération de shoopage puisqu'il permet d'assurer une meilleure liaison mécanique et électrique entre les feuillets anodiques d'une part et les feuilles cathodiques d'autre part.

Lorsque la roue a accompli un tour, on obtient un sandwich capacitif élémentaire. Il suffit de réaliser plusieurs tours de roue pour obtenir un empilement de n sandwichs élémentaires qui seront ultérieurement assemblés en parallèle pour former un ruban capacitif. La figure 3 illustre la manière de procéder à l'enroulement. La rotation de la roue 6 permet de réaliser l'empilement des sandwichs élémentaires à partir de quatre bobines. Il est nécessaire de disposer d'au moins quatre bobines : une bobine 7 pour la feuille cathodique, une bobine 8 pour la feuille anodique et deux bobines 9 et 10 pour le support d'électrolyte. Il est en effet nécessaire de disposer des deux bobines 9 et 10 sinon, au bout d'un tour de roue, les feuilles anodique et cathodique seraient mises en contact. On réalise ainsi des empilements : feuille cathodique – support d'électroylte – feuille anodique – support d'électrolyte – feuille cathodique – etc.

Une fois réalisé l'empilement des n sandwichs élémentaires, c'est-à-dire le ruban capacitif, un intercalaire est enroulé sur un tour de roue. Il est impératif que la nature de l'intercalaire soit telle qu'elle assure une mauvaise adhérence entre celui-ci et le métal utilisé pour le shoopage. Dans le cas de feuilles anodique et cathodique en aluminium, le shoopage peut être réalisé par projection d'aluminium. Les intercalaires seront alors avantageusement choisis en acier. Une largeur d'intercalaire de 6 à 7 mm est satisfaisante dans le cas d'une largeur de feuilles de 4,5 mm.

L'opération de bobinage des rubans capacitifs est poursuivie selon le même processus, le nombre de rubans superposés n'étant limité que par le risque d'effondrement de l'empilement. Dans l'exemple décrit, il est possible de réaliser l'empilement de 25 rubans ce qui représente une épaisseur de 40 mm. L'empilement est alors cerclé grâce à un dispositif de serrage contrôlé, à des fins de compactage.

Suivant la nature du support d'électrolyte utilisé, il peut être intéressant de réaliser, à ce stade de fabrication, un traitement thermique favorisant la soudure ou le collage des différentes couches de support d'électrolyte sur les feuillets anodiques ou cathodiques. Cette opération donne plus de rigidité à l'ensemble. La température à laquelle se fait le traitement thermique peut être comprise entre 125 et 140° C et l'opération peut durer jusqu'à 8 heures.

L'étape suivante consiste à relier les différents feuillets de même polarité entre eux. Pour ce faire, on utilisera de préférence de l'aluminium pur qui sera déposé par shoopage. Le shoopage pourra être exécuté alternativement sur une face puis sur l'autre mais il est préférable de l'effectuer symétriquement et simultanément de façon à réduire les déformations du ruban capacitif. Ceci permet également de réduire le coût de l'opération.

Les différents rubans capacitifs sont ensuite séparés de la roue support par sectionnement en un ou deux endroits de la circonférence selon l'épaisseur de chacun des rubans. Selon les cas, la longueur de ces rubans va de 1 à 3 mètres. Quand ils sont détachés de la roue, leur forme est celle d'un arc de grand rayon. Il s'agit ensuite de procéder à la découpe des rubans au pas prévu pour l'obtention des pavés capacitifs.

Plusieurs procédés de découpe peuvent être utilisés. On peut employer des techniques de sciage, de fraisage, de meulage à plus ou moins grande vitesse avec ou sans apport de lubrifiant. On peut encore employer une technique de découpe laser ou de découpe par jet liquide à haute pression. Cette dernière technique peut utiliser comme liquide l'électrolyte dont on se servira dans l'étape suivante. Quelle que soit la technique utilisée, la découpe provoque la dégradation des feuillets anodiques au niveau de tronçonnage. Cette dégradation consiste en la disparition locale du diélectrique d'anode. Les surfaces concernées par cette dégradation ne sont pas très importantes mais il est nécessaire de les restaurer.

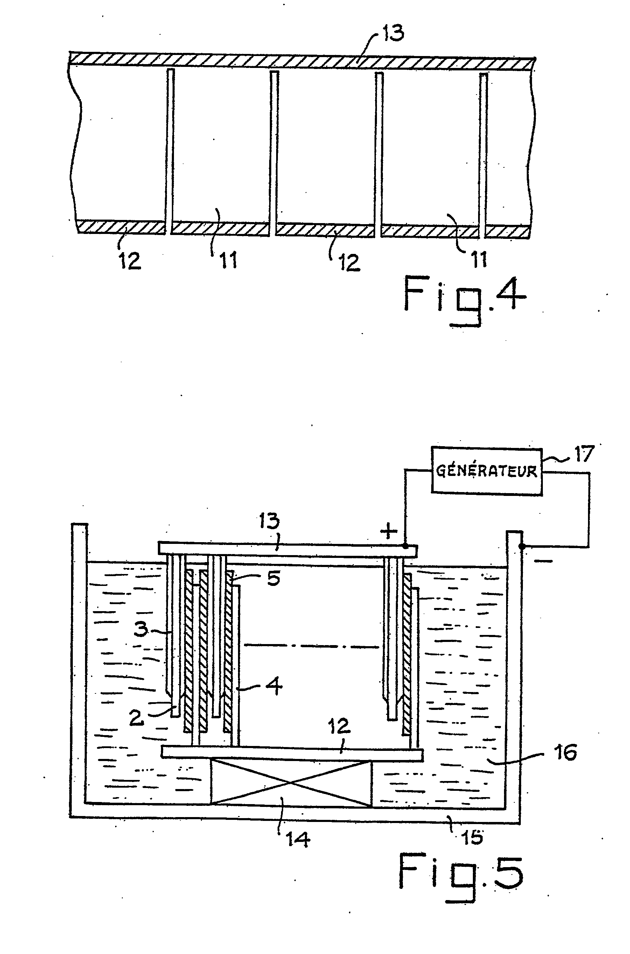

La découpe en elle-même peut être conduite de deux façons différentes. Suivant une première variante, les rubans capacitifs vont être coupés au pas prévu mais la coupe sera incomplète de façon à ne pas entamer l'extrémité de l'armature positive. La figure 4 est une vue de dessus partielle du ruban capacitif ainsi découpé. On obtient ainsi une sorte de peigne dont les dents sont constituées par les pavés 11 avec leur armature négative 12. Les pavés seront donc retenus par l'armature positive 13 qui reste continue.

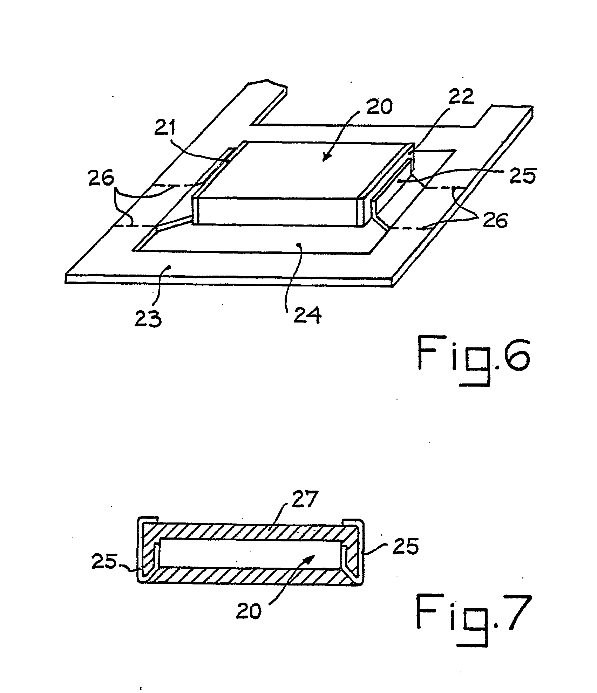

La restauration du diélectrique peut se faire par électrolyse, en immergeant le ruban capacitif dans un bain électrolytique tout en gardant l'armature positive hors du bain. Le bain électrolytique est par exemple constitué d'une solution aqueuse d'acide borique à 7%. Le courant continue appliqué sera de l'ordre de 0,4 mA par $cm^2$ de surface anodique, jusqu'à obtention d'une tension équivalente à la tension d'oxydation de la feuille anodique (35 V dans l'exemple choisi). La durée de l'opération est rapide et n'excède pas quelques minutes. La figure 5 décrit l'opération de restauration du diélectrique. Le ruban capacitif est vu selon l'une de ses extrémités tronçonnées. On a représenté les parties détruites du diélectrique 3. Son armature négative tronçonnée 12 est placée sur un support isolant poreux 14 reposant sur le fond d'un bac 15 en matériau conducteur de l'électricité. Le niveau du bain électrolytique 16 est tel qu'il n'atteint pas l'armature positive 13. Le générateur de tension continu 17 permettant l'électrolyse est branché entre l'armature positive 13 et le bac 15.

On procède ensuite à l'élimination de l'électrolyte par lavage et séchage. Le ruban tronçonné en peigne est alors prêt à recevoir son électrolyte final.

Selon une seconde variante, les rubans capacitifs sont tronçonnés totalement. Les pavés capacitifs sont regroupés en unité de travail par transfert dans un bac d'électrolyse. Ils sont placés comme précédemment sur un support isolant poreux et leurs électrodes positives émergent du bain électrolytique. Les pavés sont disposés de sorte que les armatures positives puissent être facilement réunies au générateur de tension. Par exemple, les pavés sont alignés et une barre de contact est placée sur les armatures positives. Les opérations d'oxydation anodiques peuvent être réalisées comme précédemment.

Il s'agit ensuite de réaliser l'imprégnation des supports d'électrolyte. Plusieurs électrolytes peuvent être employés, par exemple le bioxyde de manganèse $MnO_2$ ou des électrolytes organiques solides. Selon le choix effectué, le processus de cette opération peut être fort différent.

Il est connu que la décomposition thermique d'une solution de nitrate de manganèse donne de l'oxyde $MnO_2$. Il suffit donc d'imprégner les supports d'électrolyte contenus dans chacun des pavés pour ensuite procéder à la pyrolyse contrôlée du nitrate de manganèse et obtenir le bioxyde de manganèse. Il est alors avantageux de choisir comme support d'électrolyte une grille en tétrafluoroéthylène plus connu sous la marque déposée "téflon", ou en tissu en verre. L'imprégnation s'effectuera par absorption après un passage éventuel sous vide. La pyrolyse doit être contrôlée avec précision de façon à éviter au maximum la corrosion des couches de diélectrique par les oxydes d'azote issus de la pyrolyse. Il est également connu qu'il est nécessaire de procéder à plusieurs opérations de pyrolyse pour obtenir une couche d'oxyde d'épaisseur suffisante. La faible corrosion subie par la couche de diélectrique peut être réparée par les méthodes habituelles de réformation. Ces opérations sont applicables indifféremment aux rubans tronçonnés partiellement ou totalement.

L'imprégnation peut également être réalisée par un électrolyte organique solide (polymère électroactif). Il existe un certain nombre de semiconducteurs organiques susceptibles de remplacer avantageusement le bioxyde de manganèse. Les plus connus de ces produits sont les sels complexes du 7-7-8-8 tétracyanoquinodiméthane désigné plus simplement sous le terme TCNQ. Les pyropyrroles peuvent être également utilisés ainsi que le tétrathiofulvalène (TTF). L'utilisation de ces produits se fait à partir de solutions dans des solvants appropriés, de suspensions cristallines ou du produit fondu. L'intérêt de ces produits est d'apporter une amélioration importante dans le comportement aux fréquences élevées ainsi qu'un faible niveau de courant de fuite. L'imprégnation s'effectue selon une technologie adaptée au produit choisi. Elle est de toute façon beaucoup plus simple à appliquer que celle relative au bioxyde de manganèse.

Après l'opération d'imprégnation, le tronçonnage des rubans est, le cas échéant, poursuivi pour obtenir des pavés individuels.

Les opérations suivantes consisteront en la mise en forme des pavés pour obtenir des composants reportables à plat.

Les pavés se présentent sous forme de parallélépipèdes et doivent recevoir des connexions sous forme de languettes plates. Ces languettes doivent pouvoir être soudées. Une protection des pavés est également nécessaire et cette protection doit tenir compte des contraintes thermiques engendrées lors du soudage des composants obtenus sur un substrat.

Les pavés peuvent être transférés automatiquement sur une connectique dont le rôle est double : apporter les languettes nécessaires à la connexion et assurer le rôle de plan de joint lors du moulage du pavé. Le moulage peut être réalisé soit à l'aide de résines injectables sous pression, soit à l'aide de résines utilisables par le procédé du moulage transfert, soit par coulée. La figure 6 est un exemple de connectique utilisable. Cette connectique est constituée par une feuille 23 d'un matériau soudable sur les shoopages anodique 21 et cathodique 22 des pavés capacitifs 20. Des découpes 24 en forme de H sont pratiquées dans la feuille 23 pour réaliser des languettes 25 qui sont repliées verticalement de manière à maintenir les pavés par un léger effet de ressort et à assurer le contact électrique avec les shoopages. Le soudage des languettes sur les shoopages peut être réalisé par différentes techniques.

Après l'opération de moulage consistant à enrober chaque pavé de résine, la feuille 23 est découpée selon les pointillés 26 et les languettes 25 sont repliées et serties autour de l'enrobage 27 comme le montre la figure 7.

Il est avantageux de prévoir sur chaque languette 25 des bossages réalisés de façon à maintenir les pavés capacitifs 20 selon des surfaces très réduites. Ceci aura pour avantage d'assurer un bon maintien mécanique des pavés. Pour permettre à l'élément capacitif de garder ses propriétés, il faut qu'il puisse supporter sans dommage les contraintes thermiques du report à plat. Une réduction de section des pattes de fixation permet de créer une résistance thermique entre les faces shoopées et les futures électrodes. La restriction de section sera de préférence réalisée sur une faible longueur afin de ne pas trop augmenter la résistance série de la connexion et par conséquent les pertes du condensateur. La section restreinte peut être obtenue par des trous percés dans les pattes de fixation.

L'exemple de connectique représenté à la figure 6 n'est pas le seul possible. D'autres configurations sont possibles. Les découpes effectuées dans la feuille 23 peuvent avoir une autre forme que celle représentée. Les pavés capacitifs peuvent être déposés à plat ou de champ. En particulier, des pliages peuvent être prévus de manière à soutenir les pavés de façon stable avant la soudure. Suivant la forme que l'on aura donné à la découpe, les électrodes externes du composant enrobé pourront être situées dans des plans perpendiculaires aux faces shoopées.

Dans le cadre d'une fabrication automatisée, la feuille de connectique se présentera sous la forme d'une bande possédant des découpes régulièrement espacées pour recevoir les pavés capacitifs. L'entraînement de la bande peut être obtenu par l'intermédiaire de trous latéraux et d'un dispositif approprié selon des techniques connues.

Le composant final obtenu se présente alors sous une forme reportable à plat. Il reste à repérer les électrodes d'anode et de cathode et à effectuer l'inscription du composant. Cette inscription peut être réalisée par marquage laser ou par toute autre méthode.

Dans l'exemple d'application cité plus haut, six tours de roue et une découpe en pavés suivant les dimensions : épaisseur 1,5 mm, largeur de ruban 4,5 mm et longueur de coupe 3,2 mm, conduisent à des chips de capacité 18 microfarads et d'une tension nominale d'utilisation de 25 V.

## Revendications

1. Procédé de fabrication de condensateurs électrolytiques, caractérisé en ce que le procédé comporte au moins les étapes suivantes :
   a) obtention d'au moins un ruban capacitif par bobinage sur une roue d'une feuille anodique (1), d'une feuille cathodique (4) et d'un support d'électrolyte (5),
   b) shoopage des faces latérales du ruban pour réaliser des armatures anodique (13) et cathodique (12),
   c) démontage du ruban capacitif de la roue,
   d) délimitation de pavés capacitifs (11) par des découpes pratiquées dans le ruban,
   e) imprégnation dudit support (5) par un électrolyte,
   f) mise en place des pavés capacitifs sur des moyens de connexion (23) destinés à former les électrodes des condensateurs,
   g) enrobage des pavés (20) dans une matière protectrice (27) de façon à laisser dépasser des parties des moyens de connexion,
   h) mise en forme desdites parties pour constituer les électrodes (25) des condensateurs.

2. Procédé selon la revendication 1, caractérisé en ce que l'enrobage de chaque pavé se présente sous la forme d'un parallélépipède et que les électrodes sont repliées sur deux faces opposées du parallélépipède pour que le condensateur obtenu se présente sous la forme d'un chips.

3. Procédé de réalisation selon l'une des revendications 1 ou 2, caractérisé en ce que le bobinage de l'étape a) est suivi d'un cerclage assurant le serrage contrôlé desdites feuilles anodique (1) et cathodique (4) et du support d'électrolyte (5).

4. Procédé de fabrication selon l'une quelconque des revendications 1 à 3, caractérisé en ce que, avant l'étape b), le ruban est soumis à un traitement thermique favorisant la soudure ou le collage du support d'électrolyte (5) sur les feuilles anodique (1) et cathodique (4).

5. Procédé de fabrication selon l'une quelconque des revendications 1 à 4, caractérisé en ce que les découpes pratiquées à l'étape d) consistent en un tronçonnage partiel du ruban qui laisse entière son armature anodique (13).

6. Procédé de fabrication selon l'une quelconque des revendications 1 à 4, caractérisé en ce que les découpes pratiquées à l'étape d) consistent en un tronçonnage total du ruban capacitif.

7. Procédé de fabrication selon l'une quelconque des revendications 1 à 6, caractérisé en ce que les pavés capacitifs (11) sont soumis à une oxydation anodique destinée à restaurer le diélectrique (3) des feuilles anodiques (1) après l'étape d).

8. Procédé de fabrication selon l'une quelconque des revendications 1 à 7, caractérisé en ce que l'électrolyte d'imprégnation est du bioxyde de manganèse.

9. Procédé de fabrication selon l'une quelconque des revendications 1 à 7, caractérisé en ce que l'électrolyte d'imprégnation est un matériau organique solide.

10. Condensateur électrolytique caractérisé en ce qu'il est obtenu par un procédé de fabrication selon l'une quelconque des revendications 1 à 9.

11. Condensateur selon la revendication 10, caractérisé en ce que les feuilles anodique (1) et cathodique (4) sont en aluminium.

12. Condensateur selon la revendication 11, caractérisé en ce que la feuille anodique (1) est gravée et oxydée.

## Claims

1. A process for making electrolytic capacitors, characterized in that it comprises at least the following steps:

   a) obtention of a least one capacitance tape by winding an anode foil (1), a cathode foil (4) and an electrolyte carrier (5) around a wheel,

   b) shooping the lateral faces of the tape in order to realize anode (13) and cathode (12) armatures,

   c) dismounting the capacitor tape from the wheel,

   d) delimitation of capacitor sections (11) by means of cuts made in the tape,

   e) impregnation of the carrier (5) with an electrolyte,

   f) mounting the capacitor sections on connection means (23) intended to form the electrodes of the capacitors,

   g) coating sections (20) with a protective material (27) in such a way as to have portions of the connection means projecting beyond said coating,

   h) shaping said portions in order to constitute the electrodes (25) of the capacitors.

2. A process according to claim 1, characterized in that the coating of each section takes the shape of a parallelepiped, and that the electrodes are bent onto the two opposite faces of the parallelepiped so that the obtained capacitor becomes chip-shaped.

3. A process according to one of claims 1 or 2, characterized in that the winding of step a) is followed by a girding adapted to ensure a controlled tying-up of the anode (1) and cathode (4) foils and of the electrolyte carrier (5).

4. A manufacturing process according to any one of claims 1 to 3, characterized in that prior to step b), the tape is subjected to a thermal treatment adapted to favour the welding or gluing of the electrolyte carrier (5) onto the anode (1) and cathode (4) foils.

5. A manufacturing process according to any one of claims 1 to 4, characterized in that the slots performed in step d) consist of a partial cutting of the tape, leaving the anode armature (13) untouched.

6. A manufacturing process according to any one of claims 1 to 5, characterized in that the slots performed in step d) consist of a complete cutting of the capacitor tape.

7. A manufacturing process according to any one of claims 1 to 6, characterized in that the capacitor sections (11) are subjected to an anodic oxidation subsequent to step d) intended to restore the dielectric (3) of the anode foils (1).

8. A manufacturing process according to any one of claims 1 to 7, characterized in that the impregnating electrolyte consists of manganese dioxide.

9. A manufacturing process according to any one of claims 1 to 7, characterized in that the impregnating electrolyte consists of a solid organic material.

10. An electrolytic capacitor, characterized in that it is obtained via the manufacturing process according to any one of claims 1 to 9.

11. A capacitor according to claim 10, characterized in that the anode (1) and cathode (4) foils consist of aluminium.

12. A capacitor according to claim 11, characterized in that the anode foil (1) is etched and oxidized.

## Patentansprüche

1. Verfahren zur Herstellung von Elektrolytkondensatoren, dadurch gekennzeichnet, daß es mindestens die folgenden Schritte aufweist:

   a) Erzeugung eines Kondensatorbandes durch Aufwickeln einer Anodenfolie (1), einer Kathodenfolie (4) und eines Elektrolytträgers (5) auf ein Rad,

   b) Spritzmetallisierung der Seitenflächen des Bandes zur Erzeugung der Anoden- und Kathodenfahnen (13 bzw. 12),

   c) Abnahme des Kondensatorbandes vom Rad,

   d) Abgrenzung von Kondensatorabschnitten (11) durch Anbringen von Einschnitten im Band,

   e) Tränkung des Trägers (5) mit einem Elektrolyten,

   f) Anordnung der Kondensatorabschnitte auf Verbindungsmitteln (23) zur Bildung der Kondensatorelektroden,

   g) Umhüllung der Abschnitte (20) mit einem Schutzmaterial (27) derart, daß Bereiche der Verbindungsmittel hindurchragen,

   h) Informbringen der Abschnitte zur Bildung der Elektroden (25) der Kondensatoren.

2. Verfahren nach Anspruch 1, dadurch gekennzeichnet, daß die Umhüllung jedes Abschnitts die Gestalt eines Parallelepipeds aufweist, und daß die Elektroden an zwei einander gegenüberliegenden Seiten des Parallelepipeds umgefaltet sind, damit der Kondensator die Gestalt eines Chips erhält.

3. Herstellungsverfahren nach einem der Ansprüche 1 oder 2, dadurch gekennzeichnet, daß auf das Aufwickeln des Schritts a) eine Umschnürung folgt, die ein kontrolliertes Spannen der Anoden- und Kathodenfolien (1 bzw. 4) und des Elektrolytträgers gewährleistet.

4. Herstellungsverfahren nach einem beliebigen der Ansprüche 1 bis 3, dadurch gekennzeichnet, daß vor dem Schritt b) das Band einer Wärmebehandlung unterworfen wird, die die Verschweißung oder Verklebung des Elektrolytträgers (5) mit den Anoden- und Kathodenfolien (1 bzw. 4) begünstigt.

5. Herstellungsverfahren nach einem beliebigen der Ansprüche 1 bis 4, dadurch gekennzeichnet, daß das Anbringen der Einschnitte in Schritt d) aus dem teilweisen Zerschneiden des Bandes besteht, bei dem seine Anodenfahne (13) ganz bleibt.

6. Herstellungsverfahren nach einem beliebigen der Ansprüche 1 bis 4, dadurch gekennzeichnet, daß das Anbringen der Einschnitte in Schritt d) aus einem vollständigen Zerschneiden des Kondensatorbands besteht.

7. Herstellungsverfahren nach einem beliebigen der Ansprüche 1 bis 6, dadurch gekennzeichnet, daß die Kondensatorabschnitte (11) einer anodischen Oxidation unterworfen werden, die zur Wiederherstellung des Dielektrikums (3) der Anodenfolien (1) im Anschluß an den Schritt d) dient.

8. Herstellungsverfahren nach einem beliebigen der Ansprüche 1 bis 7, dadurch gekennzeichnet, daß der Elektrolyt zur Tränkung Mangandioxid ist.

9. Herstellungsverfahren nach einem beliebigen der Ansprüche 1 bis 7, dadurch gekennzeichnet, daß der Tränkungselektrolyt ein organisches Feststoffmaterial ist.

10. Elektrolytkondensator, dadurch gekennzeichnet, daß er durch ein Herstellungsverfahren gemäß einem beliebigen der Ansprüche 1 bis 9 erzeugt wird.

11. Kondensator nach Anspruch 10, dadurch gekennzeichnet, daß die Anoden- und Kathodenfolien (1 bzw. 4) aus Aluminium bestehen.

12. Kondensator nach Anspruch 11, dadurch gekennzeichnet, daß die Anodenfolie (1) geätzt und oxidiert ist.

Fig.1

Fig.2

Fig.3

Fig.4

GÉNÉRATEUR

Fig.5

Fig.6

Fig.7